# EUROPÄISCHE PATENTSCHRIFT

(11) **EP 0 518 002 B1**
(45) Veröffentlichungstag und Bekanntmachung des Hinweises auf die Patenterteilung: **24.05.1995**
(21) Anmeldenummer: 92103561.4
(22) Anmeldetag: 02.03.1992
(51) Int. Cl.: B62D 1/18

(54) **Vorrichtung zur Lenkradverstellung in einem Fahrzeug, insbesondere Flurförderfahrzeug**
Apparatus for adjusting the steering wheel of a vehicle, especially industrial truck
Dispositif pour positionner le volant dans un véhicule, notamment chariot de manutention

(30) Priorität: 12.06.1991 DE 4119276
(43) Veröffentlichungstag der Anmeldung: 16.12.1992
(73) Patentinhaber: Jungheinrich Aktiengesellschaft, 22047 Hamburg (DE)
(72) Erfinder: Fähndrich, Rainer, Dipl.-Ing., W-2000 Norderstedt (DE)
(74) Vertreter: Graalfs, Edo, Dipl.-Ing. Patentanwälte Hauck, Graalfs, Wehnert, Döring, Siemons

(56) Entgegenhaltungen:
- EP-A- 0 402 133
- WO-A-90/05082
- DE-C- 3 603 173
- US-A- 3 877 670
- US-A- 4 179 137
- US-A- 4 195 535

## Beschreibung

Die Erfindung bezieht sich auf eine Vorrichtung zur Lenkradverstellung in einem Fahrzeug, insbesondere Flurförderfahrzeug nach dem Oberbegriff des Patentanspruchs 1. Eine solche Vorrichtung ist zum Beispiel aus der WO-A-90/05082 bekannt.

Aus der DE-OS 33 00 268, der DE-OS 25 11 901 oder der DE-OS 31 07 459 sind Verstellvorrichtungen für das Lenkrad von Fahrzeugen bekanntgeworden. Bei den bekannten Vorrichtungen wird nicht nur der Abstand des Lenkrads vom Fahrersitz eingestellt, sondern zwangsläufig auch die Winkelstellung des Lenkrads, was aus ergonomischen Gründen unerwünscht sein kann. Daher ist aus der DE-PS 36 03 173 auch eine Vorrichtung bekanntgeworden, bei der bei einer Anpassung der Lenkradhöhe und des seitlichen Abstands im Hinblick auf den Fahrersitz eine vorgegebene Schrägstellung des Lenkrads beibehalten wird. Die bekannte Konstruktion sieht vor, daß das Lagerbauteil für das Lenkrad unverschwenkbar in zwei Schlitzen verschiebbar geführt ist, die einen bestimmten Winkel zueinander einnehmen. Dadurch läßt sich das Lenkrad in Achsrichtung translatorisch und parallel zu sich selbst verlagern unter Beibehaltung seiner Ausrichtung.

Bei batteriegetriebenen Flurförderfahrzeugen befindet sich die Batterie häufig unterhalb des Fahrersitzes. Der Zugang zu dem die Batterie aufnehmenden Fach erfolgt von oben. Im Fall der Batterieentnahme muß daher das Lenkrad so weit nach vorn verstellt werden, daß ein ausreichend großer Freiraum geschaffen ist. In vielen Fällen läßt sich eine Verschiebung des Lenkrads vom Fahrersitz fort in ausreichendem Maße vornehmen, um diesen Freiraum herzustellen. Ist die Fahrzeuglänge aus unterschiedlichen Gründen begrenzt, kann kein ausreichender Verstellweg zur Verfügung gestellt werden.

Der Erfindung liegt daher die Aufgabe zugrunde, eine Vorrichtung zur Lenkradverstellung in einem Fahrzeug, insbesondere einem Flurförderfahrzeug, zu schaffen, die eine ausreichende Verstellung des Lenkrads auch bei begrenzter Fahrzeuglänge ermöglicht.

Diese Aufgabe wird erfindungsgemäß gelöst durch die Merkmale des Patentanspruchs 1.

Bei der erfindungsgemäßen Vorrichtung weist das fahrzeugfeste Führungsbauteil eine annähernd horizontale Führung auf, an deren vom Fahrersitz abgewandten Ende sich ein nach unten erstreckender Führungsabschnitt anschließt. Das Lagerbauteil wirkt mit zwei beabstandeten Lagerabschnitten mit der Führung zusammen.

Eine horizontale Führung für das Lagerbauteil, beispielsweise mit Hilfe eines horizontalen Schlitzes, ist aus der bereits genannten DE-PS 36 03 173 bekanntgeworden. Erfindungswesentlich ist der sich am vorderen Ende nach unten erstreckende Führungsabschnitt sowie die Ausbildung der geführten Teile des Lagerbauteils. Gelangt nämlich der vordere Lagerabschnitt an das Ende des horizontalen Führungsabschnitts kann er durch ein Kippen des Lagerbauteils und damit auch des Lenkrads in den sich nach unten erstreckenden Führungsabschnitt eintreten. Die Schwenkachse des Lagerbauteils erstreckt sich dabei durch den an der horizontalen Führung anliegenden hinteren Lagerabschnitt. Mithin wird bei der erfindungsgemäßen Vorrichtung das Lenkrad in der vorgeschobenen Stellung mitsamt seines Lagerbauteils nach vorn geklappt. Dadurch ist auch bei relativ geringer horizontaler Verstellänge ein ausreichender Freiraum geschaffen, der die Beladung und die Entnahme mit einer Batterie unter dem Fahrersitz problemlos ermöglicht.

In der nach vorn geklappten Stellung hat das Lenkrad naturgemäß nicht mehr seine ursprüngliche Winkelstellung. Da in dieser Position das Fahrzeug indessen nicht gefahren und damit nicht gelenkt wird, ist die Anderung der Winkelstellung ohne Bedeutung.

Wie bereits erwähnt, kann die Führung von einem Schlitz gebildet sein, der an dem vom Fahrersitz abgewandten Ende hakenförmig nach unten abgebogen ist. Der abgebogene Abschnitt hat zum Beispiel den Radius, der sich bei der Verschwenkung des Bauteils in den hinteren Lagerpunkt ergibt.

Zur leichteren Verstellung des Lenkrads bzw. Führung des Lagerbauteils sind die Lagerabschnitte von Rollen gebildet.

In der gewünschten Position des Lenkrads muß das Lagerbauteil gegenüber dem fahrzeugfesten Führungsbauteil festgelegt werden. Dies geschieht mit Hilfe geeigneter Klemmmittel. Befindet sich das Lenkrad in der vordersten Position, in der der vordere Lagerabschnitt oberhalb des sich nach unten erstreckenden Führungsabschnitts liegt, besteht die Gefahr, daß bei einem Stoß gegen das Lenkrad die Klemmkräfte nicht ausreichen und das Lenkrad ungewollt in die Freigabestellung geklappt wird. Daher sieht eine Ausgestaltung der Erfindung vor, daß auf dem Lagerbauteil ein federvorgespannter Sicherungshaken schwenkbar gelagert ist, der in der vom Fahrersitz entfernten Position des Lagerbauteils mit einem fahrzeugfesten Anschlag zusammenwirkt dergestalt, daß der vordere Lagerabschnitt nur mit dem sich nach unten erstreckenden Führungsabschnitt in Eingriff gelangt, wenn der Sicherungshaken vom Anschlag fort verschwenkt wird. Solange der Sicherungshaken mit dem Anschlag zusammenwirkt, kann das Lenkrad nicht nach vorn geklappt werden. Hierzu muß erst der Sicherungshaken vom Anschlag freigemacht werden. Dies kann durch eine übliche Manipulation geschehen. Besonders vorteilhaft ist, wenn die Entsicherung des Sicherungshakens mit Hilfe eines Klemmhebels erfolgt, mit dem die Klemmvorrichtung betätigt wird. Wird der Klemmhebel in die Freigabestellung bewegt, gelangt ein Betätigungsabschnitt des Klemmhebels mit dem Sicherungshaken in Eingriff, um diesen in die Entsicherungsstellung zu verschwenken.

Die Klemmittel können auf verschiedene Weise ausgebildet sein. Eine Ausgestaltung der Erfindung sieht hierzu vor, daß die Klemmittel zwei Klemmplatten aufweisen, die an entgegengesetzten Enden an einer Führungsplatte anliegen, und mindestens zwei am Lagerbauteil angebrachte Bolzen durch die Klemmplatte hindurchgehen,wobei eine Klemmplatte sich auf einem Bund der Bolzen abstützt,während die andere Platte auf den Bolzen verschiebbar gelagert ist. Eine Andrückvorrichtung wirkt auf die andere Platte, um beide Klemmplatten mit der Führungsplatte in reibenden Eingriff zu bringen. Dieser Eingriff kann nach einer weiteren Ausgestaltung der Erfindung mit Hilfe eines Spindeltriebs erfolgen, der zum Beispiel an einer Lagerplatte angebracht ist, an der auch die Bolzen befestigt sein können. Die Bolzen können auch zur Lagerung der Rollen dienen, mit denen das Lagerbauteil im Schlitz des Führungsbauteils geführt ist.

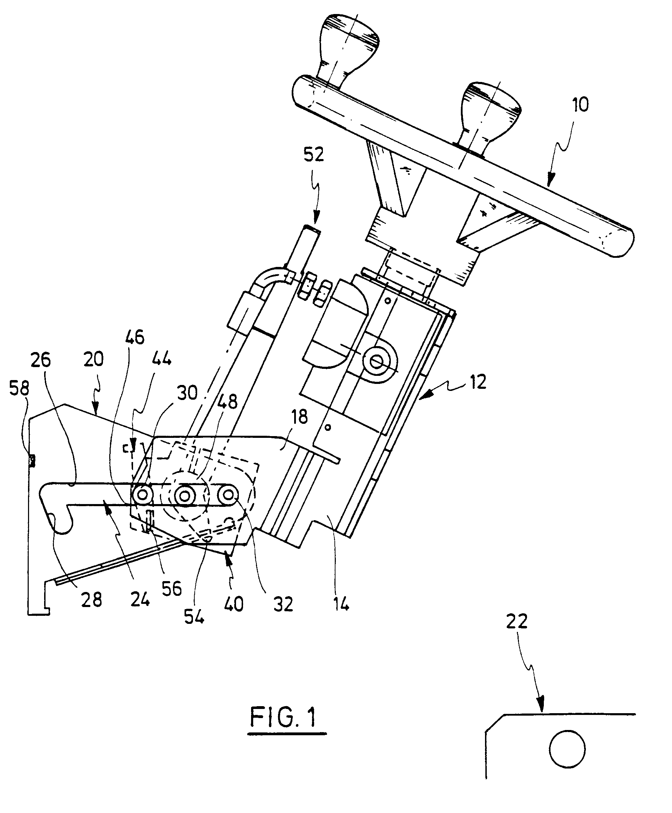

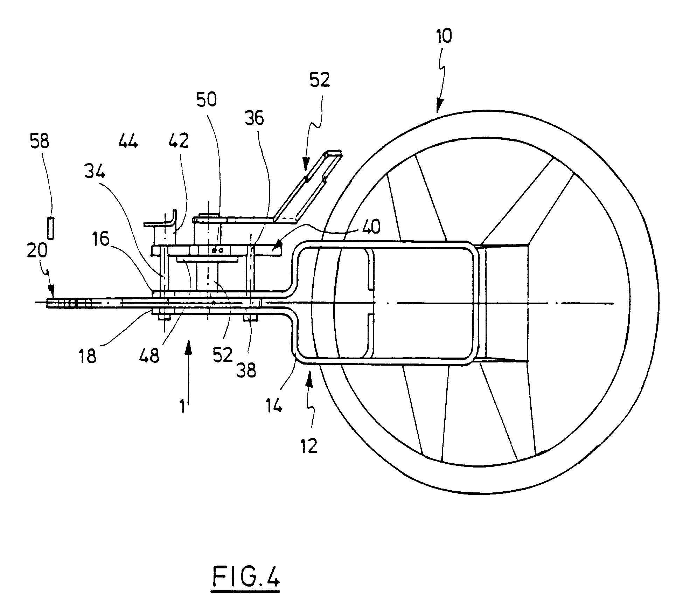

Die Erfindung wird nachfolgend anhand von Zeichnungen näher erläutert.
- Fig. 1: zeigt schematisch die Seitenansicht einer Vorrichtung nach der Erfindung in der zurückgeschobenen Stellung des Lenkrads.
- Fig. 2: zeigt eine ähnliche Ansicht wie Fig. 1 in der vorgeschobenen Stellung des Lenkrads.
- Fig. 3: zeigt eine ähnliche Ansicht wie Fig. 1 in der geklappten Stellung des Lenkrads.
- Fig. 4: zeigt eine Draufsicht auf die Vorrichtung nach Fig. 1
Bei der Erläuterung des dargestellten Ausführungsbeispiels wird zunächst auf die Figuren 1 und 4 Bezug genommen. Ein Lenkrad 10 wird auf nicht näher dargestellte und beschriebene Weise in einem Schlitten 12 drehbar gelagert. Mit dem Lenkrad 10 kann eine Lenksäule gekoppelt sein. Alternativ kann im Schlitten 12 ein Lenkgeber angeordnet sein, der über Signalleitungen mit einem Lenkantrieb gekoppelt ist. Wie aus Fig. 4 hervorgeht, weist der Schlitten 12 ein Gehäuse 14 aus Blechmaterial auf, das nach vorn zwei Klemmplatten 16, 18 ausbildet, die parallel zueinander beidseitig einer Führungsplatte 20 angeordnet sind. Die Führungsplatte 20 ist fahrzeugfest, was im einzelnen nicht dargestellt ist. Das Fahrzeug ist zum Beispiel ein batteriegetriebenes Flurförderfahrzeug, von dem bei 22 die Batterien angedeutet ist. Üblicherweise befindet sich die Batterie eines derartigen Fahrzeugs unterhalb des Fahrersitzes, der aus Gründen der Zugänglichkeit zum Batteriefach entfernt werden muß.

Die Führungsplatte 20 weist einen Führungsschlitz 24 auf, der einen horizontalen Abschnitt 26 und einen im spitzen Winkel sich nach unten erstreckenden Abschnitt 28 aufweist. In Fig. 1 sind zwei Führungsrollen 30, 32 dargestellt, die im Führungsschlitz 24 geführt sind. Aus Gründen der Klarheit sind die Rollen 30, 32 in durchgehenden Linien gezeichnet, was die Seitenansicht der in Fig. 4 dargestellten Vorrichtung nicht ergibt. Die Führungsrollen 30, 32 sind auf Bolzen 34, 36 drehbar gelagert, die sich durch die Klemmplatten 16, 18 und durch den Führungsschlitz 24 hindurcherstrecken. Der Kopf 38 der Bolzen liegt an der Außenseite der Klemmplatte 18 an. Das Ende des Bolzens 36 ist in eine Gewindebohrung einer Lagerplatte 40 eingeschraubt. Der Bolzen 34 erstreckt sich durch eine Bohrung der Lagerplatte 40 hindurch und hält ein Lagerteil 42 gegen die Lagerplatte 40, das seinerseits einen Sicherungshebel 44 schwenkbar lagert. In Fig. 1 ist die Kontur des Sicherungshebels 44 gestrichelt gezeichnet.Der Sicherungshebel wird von einer Spiralfeder 46 entgegengesetzt zur Uhrzeigerrichtung beaufschlagt.

Die Lagerplatte 40 lagert in einer Öffnung eine Mutter 48, die mit Hilfe einer Madenschraube 50 festgelegt ist. In die Mutter ist eine Gewindespindel 52 eingeschraubt, die an der Klemmplatte 16 angreift. Das andere Ende der Spindel 52 erstreckt sich über die andere Seite der Lagerplatte 40 hinaus und ist mit einem Klemmhebel 52 verbunden. Wie aus Fig. 1 hervorgeht, hat der Klemmhebel am unteren Ende einen nockenartigen Betätigungsabschnitt 54. Dieser kann bei einer Verschwenkung des Hebels 52 mit einem Betätigungsabschnitt 56 des Sicherungshakens 44 zusammenwirken.

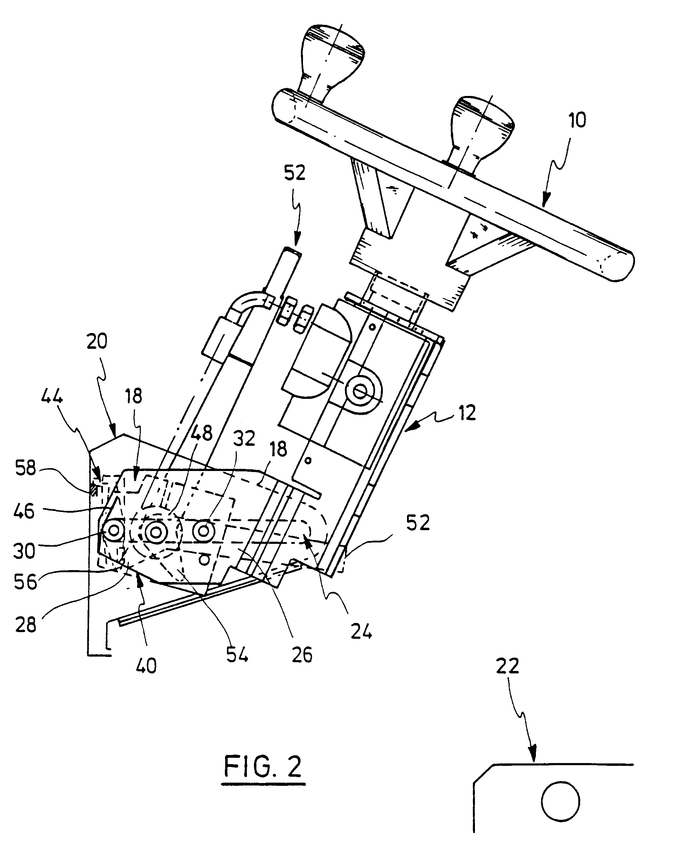

In der in Fig. 1 und 4 gezeigten Position des Klemmhebels sind die Klemmplatten 16, 18 gegen die Führungsplatte 20 geklemmt, wodurch der Schlitten 12 in seiner eingenommenen Lage gehalten wird, auch wenn auf das Lenkrad 10 mehr oder weniger Druck aufgebracht wird. Soll das Lenkrad 10 eine andere Position relativ zum Fahrersitz bzw. zur Batterie 22 annehmen, wird der Klemmhebel in Fig. 1 in Uhrzeigerrichtung verschwenkt. Dadurch hebt die Klemmplatte 16 von der Führungsplatte 10 ab und der Schlitten kann mit Hilfe der Rollen 30, 32 verstellt werden. Dabei wird zum Beispiel eine Stellung erhalten, wie sie in Fig. 2 wiedergegeben ist. Die vordere Rolle 30 befindet sich am Ende des horizontalen Führungsabschnitts 26, so daß das Lenkrad 10 seine am weitesten vom Fahrersitz entfernt liegende Position eingenommen hat. Wie erkennbar, liegt ein Teil des Lenkrades 10 nach wie vor vertikal oberhalb des Sitzes bzw. der Batterie 22, so daß die Entfernung des Sitzes und die Entnahme einer Batterie bzw. das Einsetzen einer Batterie 22 in den Batterieaufnahmeraum unterhalb des Sitzes nicht bewerkstelligt werden kann.

In Fig. 2 ist ferner zu erkennen, daß in der vorgeschobenen Position des Schlittens 12 der Sicherungshaken 44 einen fahrzeugfesten Anschlag 58 übergreift. Auch bei gelösten Klemmplatten 16, 18 kann sich die Rolle 30 nicht in den sich nach unten erstreckenden Abschnitt 28 des Führungsschlitzes 24 hineinbewegen. Der Sicherungshaken 44 dient dazu, ein ungewolltes Hochklappen des Lenkrads 10 auch bei angeklemmten Klemmplatten 16, 18 zu vermeiden. Es kann nämlich geschehen, daß die Klemmung nicht ausreicht, um bei einem Stoß von vorn gegen das Fahrzeug oder gegen das Lenkrad eine Schwenkbewegung des Schlittens 12 um die hintere Rolle 32 zu verhindern. Durch den Sicherungshaken 44 wird in jedem Fall ein Hochklappen vermieden.

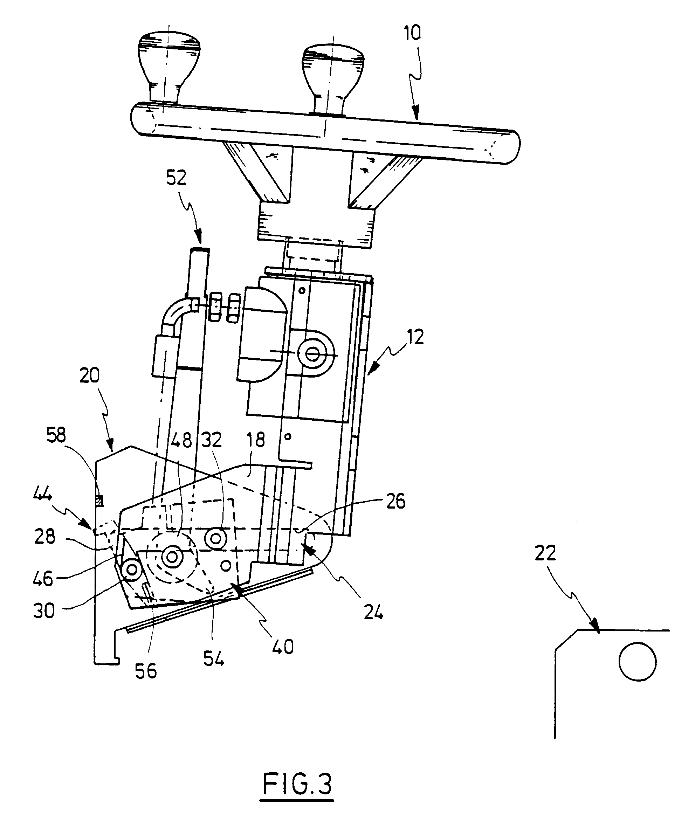

Soll indessen das Lenkrad 10 hochgeklappt werden, erfolgt über den Klemmhebel 52 eine Betätigung des Sicherungshakens 44. In Fig. 2 ist der Klemmhebel 52 strichliert gezeichnet in seiner verschwenkten Position, in der er annähernd horizontal liegt. Dabei greift der Betätigungsabschnitt 54 des Klemmhebels 52 am Betätigungsabschnitt 56 des Sicherungshakens 44 an und verschwenkt diesen in Uhrzeigerrichtung, wie in Fig. 2 ebenfalls durch gestrichelte Linien angedeutet. Jetzt kann die Rolle 30 in den Schlitzabschnitt 28 eintreten und mithin ein Verschwenken des Schlittens 12 und des Lenkrads 10 um die Achse der Rolle 32 ermöglichen. Dies ist in Fig. 3 dargestellt, die das Lenkrad 10 in der hochgeklappten Stellung zeigt. Wie aus Fig. 3 ebenfalls hervorgeht, ist der Raum oberhalb des Sitzes völlig frei, so daß eine Batterie 22 unterhalb des Sitzes ungehindert entnommen werden kann.

## Patentansprüche

1. Vorrichtung zur Lenkradverstellung in einem Fahrzeug, insbesondere Flurförderfahrzeug, mit einem Lenkrad (10), das in einem Lagerbauteil drehbar gelagert ist, einem mit dem Lagerbauteil (12) zusammenwirkenden fahrzeugfesten Führungsbauteil (20) dergestalt, daß das Lenkrad zumindest in seinem Abstand vom Fahrersitz unter Beibehaltung seiner Winkellage verstellbar ist, und Klemmitteln, mit denen die Relativposition von Führungsbauteil und Lagerbauteil festlegbar ist, wobei das Führungsbauteil (20) eine annähernd horizontale Führung (26) aufweist, dadurch gekennzeichnet, daß am vom Fahrzeugsitz abgewandten Ende der Führung sich ein nach unten erstreckender Führungsabschnitt (28) anschließt und das Lagerbauteil (12) mittels zwei beabstandeter Lagerabschnitte (30, 32) mit der Führung (24) zusammenwirkt.

2. Vorrichtung nach Anspruch 1, dadurch gekennzeichnet, daß die Führung von einem Schlitz (24) gebildet wird, der am vom Fahrersitz abgewandten Ende hakenförmig nach unten abgebogen ist.

3. Vorrichtung nach Anspruch 2, dadurch gekennzeichnet, daß der Schlitz um einen Winkel von größer als 90° abgebogen ist.

4. Vorrichtung nach einem der Ansprüche 1 bis 3, dadurch gekennzeichnet, daß die Lagerabschnitte von Rollen (30, 32) gebildet sind.

5. Vorrichtung nach einem der Ansprüche 1 bis 4, dadurch gekennzeichnet, daß am Lagerbauteil (12) ein federvorgespannter Sicherungshaken (44) schwenkbar gelagert ist, der in der vom Fahrersitz entfernten Position des Lagerbauteils (12) mit einem fahrzeugfesten Anschlag (58) zusammenwirkt dergestalt, daß der vordere Lagerabschnitt nur mit dem sich nach unten erstreckenden Führungsabschnitt (28) in Eingriff gelangt, wenn der Sicherungshaken (44) vom Anschlag (58) fort verschwenkt wird.

6. Vorrichtung nach Anspruch 1 und 5, dadurch gekennzeichnet, daß die Klemmittel von einem zwischen einer Klemmund einer Freigabestellung verschwenkbaren Klemmhebel (52) betätigbar sind und der Klemmhebel (52) einen mit dem Sicherungshaken (44) zusammenwirkenden Betätigungsabschnitt (54) aufweist dergestalt, daß der Sicherungshakten (44) in die Entsicherungsstellung verschwenkt wird, wenn der Klemmhebel (52) in die Freigabestellung verstellt wird.

7. Vorrichtung nach einem der Ansprüche 1 bis 6, dadurch gekennzeichnet, daß die Klemmittel zwei Klemmplatten (16, 18) aufweisen, die an gegenüberliegenden Seiten an einer Führungsplatte (20) anliegen, mindestens zwei am Lagerbauteil (12) angebrachte Bolzen (34, 36) sich durch die Klemmplatten (16, 18) hindurcherstrecken, wobei eine Klemmplatte (18) sich auf einem Bund (38) der Bolzen (34, 36) abstützt, während die andere Platte (16) auf dem Bolzen (34, 36) verschiebbar gelagert ist und auf die andere Platte (16) eine Andrückvorrichtung (48, 52) wirkt.

8. Vorrichtung nach Anspruch 7, dadurch gekennzeichnet, daß die Andrückvorrichtung einen Spindeltrieb (48, 52) aufweist.

9. Vorrichtung nach Anspruch 7 oder 8, dadurch gekennzeichnet, daß die Klemmplatten (16, 18) Abschnitte eines aus Blechmaterial bestehenden Teils (14) des Lagerbauteils (12) gebildet sind.

10. Vorrichtung nach Anspruch 4 und 7, dadurch gekennzeichnet, daß die Rollen (30, 32) zwischen den Klemmplatten (16, 18) auf den Bolzen (34, 36) gelagert sind.

11. Vorrichtung nach Anspruch 6 und 7,dadurch gekennzeichnet, daß der Sicherungshaken (44) auf einem der Bolzen (34, 36) schwenkbar gelagert ist.

12. Vorrichtung nach einem der Ansprüche 7 bis 10, dadurch gekennzeichnet, daß die Bolzen (34, 36) an einer Lagerplatte (40) angebracht sind, die auch die Andrückvorrichtung (48, 52) lagert.

## Claims

1. Apparatus for adjusting the steering wheel of a vehicle, in particular a lift truck, comprising a steering wheel (10) rotatably mounted in a mounting member, a guide member (20) fixed relative to the vehicle and cooperating with the mounting member (12) such that the steering wheel is displaceable at least as to its spacing from the driver's seat while it maintains its angular position, and clamping means for setting the relative positions of the guide member and the mounting member, the guide member (20) including an approximately horizontal guide (26), characterized in that a downwardly extending guide portion (28) is joined to the end of the guide remote from the driver's seat and the mounting member (12) cooperates with the guide (24) by means of a pair of spaced mounting portions (30, 32).

2. Apparatus according to claim 1, characterized in that the guide is comprised of a slot (24) which deflects downwardly in a hook-shaped manner at the end remote from the driver's seat.

3. Apparatus according to claim 2, characterized in that the slot deflects for an angle exceeding 90°.

4. Apparatus according to any of claims 1 to 3, characterized in that the mounting portions are comprised of rollers (30, 32).

5. Apparatus according to any of claims 1 to 4, characterized in that a spring biased safety hook (44) is pivotally mounted to the mounting member (12), which safety hook, when the mounting member (12) is in the position remote from the driver's seat, cooperates with a fixed abutment (58) such that the front mounting portion comes into engagement only with the downwardly extending guide portion (28) when the safety hook (44) has been pivoted away from the abutment (58).

6. Apparatus according to claims 1 and 5, characterized in that the clamping means are actuatable by a clamping lever (52) pivotal between clamping and release positions, and the clamping lever (52) comprises an actuating portion (54) cooperating with the safety hook (44) such that the safety hook (44) is pivoted to the unlocking position when the clamping lever (52) is displaced into the release position.

7. Apparatus according to any of claims 1 to 6, characterized in that the clamping means comprise a pair of clamping plates (16, 18) in engagement with a guide plate (20) at opposite sides, at least two pins (34, 38) mounted to the mounting member (12) extend through the clamping plates (16, 18), a clamping plate (18) is supported against a land (38) of the pin (34, 36) while the other plate (16) is displaceably mounted on the pin (34, 36), and an urging device (46, 52) acts upon the other plate (16).

8. Apparatus according to claim 7, characterized in that the urging device comprises a spindle drive (48, 52).

9. Apparatus according to claim 7 or claim 8, characterized in that the clamping plates (16, 18) are portions of a part (14) of the mounting member (12) made of sheet metal.

10. Apparatus according to claims 4 and 7, characterized in that the rollers (30, 32) are mounted on the pins (34, 36) between the clamping plates (16, 18).

11. Apparatus according to claims 6 and 7, characterized in that the safety hook (44) is pivotally mounted on one of the pins (34, 36).

12. Apparatus according to any of claims 7 to 10, characterized in that the pins (34, 36) are mounted to a mounting plate (40) which mounts also the urging device (48, 52).

## Revendications

1. Dispositif pour régler la position d'un volant dans un véhicule, en particulier un chariot de manutention au sol, comportant un volant (10), monté tournant dans une pièce support (12), une pièce de guidage (20), fixée au véhicule et coopérant avec la pièce support (12) de telle façon que le volant puisse être réglé en position au moins en ce qui concerne sa distance au siège du conducteur, en conservant sa position angulaire, et des moyens de blocage avec lesquels on peut maintenir fixe la position relative de la pièce de guidage et de la pièce support, étant entendu que la pièce de guidage (20) présente un guidage (26) sensiblement horizontal,
caractérisé en ce qu'une partie de guidage (28) dirigée vers le bas se raccorde à l'extrémité du guidage située du côté opposé au siège du conducteur, et en ce que la pièce support (12) coopère avec le guidage (24) au moyen de deux éléments supports (30, 32) situés à une certaine distance l'un de l'autre.

2. Dispositif suivant la revendication 1, caractérisé en ce que le guidage est formé par une fente (24) qui est coudée vers le bas en formant un crochet à l'extrémité opposée au siège du conducteur.

3. Dispositif suivant la revendication 2, caractérisé en ce que la fente est coudée d'un angle plus grand que 90°.

4. Dispositif suivant l'une quelconque des revendications 1 à 3, caractérisé en ce que les éléments supports sont constitués par des galets (30, 32).

5. Dispositif suivant l'une quelconque des revendications 1 à 4, caractérisé en ce qu'un crochet de sécurité (44), précontraint par un ressort, est monté pivotant sur la pièce support (12) et ce crochet, dans la position où la pièce support (12) est éloignée du siège du conducteur, coopère avec une butée (58) solidaire du véhicule, de telle façon que l'élément support avant ne vient en prise qu'avec la partie de guidage (28) dirigée vers le bas, quand le crochet de sécurité (44) continue à pivoter sous l'effet de la butée (58).

6. Dispositif suivant la revendication 1 et la revendication 5, caractérisé en ce que les moyens de blocage peuvent être actionnés par un levier de blocage (52) pouvant pivoter entre une position de blocage et une position de libération, et en ce que le levier de blocage (52) présente un élément d'actionnement (54) qui coopère avec le crochet de sécurité (44) de façon à faire basculer ce dernier en dehors de la position de sécurité, quand le levier de blocage (52) est en position de libération.

7. Dispositif suivant l'une quelconque des revendications 1 à 6, caractérisé en ce que les moyens de blocage présentent deux plaques de blocage (16, 18), qui sont en contact, sur deux faces opposées, contre une pièce de guidage (20), en ce qu'au moins deux axes (34, 36), montés sur la pièce support (12), traversent les plaques de blocage (16, 18), étant entendu qu'un plaque de blocage (18) s'appuie sur une collerette (38) des axes (34, 36), tandis que l'autre plaque (16) est montée coulissante sur les axes (34, 36) et qu'un dispositif de pressage (48, 52) agit sur l'autre plaque (16).

8. Dispositif suivant la revendication 7, caractérisé en ce que le dispositif de pressage présente un entraînement par broche (48, 52).

9. Dispositif suivant la revendication 7 ou la revendication 8, caractérisé en ce que les plaques de blocage (16, 18) sont des éléments d'une partie (14) de la pièce support (12), constituée d'un matériau en tôle.

10. Dispositif suivant la revendication 4 et la revendication 7, caractérisé en ce que les galets (30, 32) sont montés sur les axes (34, 36), entre les plaques de blocage (16, 18).

11. Dispositif suivant la revendication 6 et la revendication 7, caractérisé en ce que le crochet de sécurité (44) est monté pivotant sur l'un des axes (34, 36).

12. Dispositif suivant l'une quelconque des revendications 7 à 10, caractérisé en ce que les axes (34, 36) sont montés sur une plaque d'appui (40) qui porte également le dispositif de pressage (48, 52).
